# EUROPÄISCHE PATENTSCHRIFT

(11) **EP 3 312 800 B1**
(45) Veröffentlichungstag und Bekanntmachung des Hinweises auf die Patenterteilung: **13.05.2020**
(21) Anmeldenummer: 17196230.1
(22) Anmeldetag: 13.10.2016
(51) Int. Cl.: G06T 7/11

(54) **VERFAHREN ZUM BEREINIGEN VON VIRTUELLEN REPRÄSENTATIONEN VON OBJEKTEN**
METHOD FOR CLEANING UP VIRTUAL REPRESENTATION OF OBJECTS
PROCÉDÉ D'APUREMENT DE REPRÉSENTATIONS VIRTUELLES D'OBJETS

(43) Veröffentlichungstag der Anmeldung: 25.04.2018
(62) Teilanmeldung aus: 16193818.8
(73) Patentinhaber: a.tron3d GmbH, 9020 Klagenfurt am Wörthersee (AT)
(72) Erfinder: JESENKO, Juergen, 9587 Riegersdorf (AT); KELZ, Engelbert, 9020 Klagenfurt (AT)
(74) Vertreter: Beer & Partner Patentanwälte KG

(56) Entgegenhaltungen:
- SHENG-HUI LIAO ET AL: "Automatic Tooth Segmentation of Dental Mesh Based on Harmonic Fields", BIOMED RESEARCH INTERNATIONAL, Bd. 2015, 1. August 2015 (2015-08-01), Seiten 1-10, XP055372133, ISSN: 2314-6133, DOI: 10.1155/2015/187173
- KAN WU ET AL: "Tooth segmentation on dental meshes using morphologic skeleton", COMPUTERS AND GRAPHICS., Bd. 38, 1. Februar 2014 (2014-02-01), Seiten 199-211, XP055372118, GB ISSN: 0097-8493, DOI: 10.1016/j.cag.2013.10.028

## Beschreibung

Die Erfindung betrifft ein Verfahren zum Entfernen unerwünschter Daten von einer optisch erfassten, virtuellen Repräsentation eines Kieferbogens umfassend Zähne und intraorale Strukturen. Insbesondere im Bereich dentaler Behandlungen sind viele Systeme zum optischen Erfassen der dreidimensionalen Geometrie von Objekten bekannt. Diese finden beispielsweise Anwendung beim Erstellen von Prothesen, Kronen, Inlays oder dergleichen, dienen der Unterstützung bei der Überwachung von kieferorthopädischen Behandlungen und/oder helfen ganz allgemein bei der Beobachtung bzw. Erfassung von intraoralen Strukturen. Der große Vorteil derartiger, optischer Systeme liegt zum einen darin, dass sie weder invasiv noch unangenehm sind, wie beispielsweise der in der herkömmlichen Zahnmedizin häufig verwendete Zahnabdruck, und dass sie auch keine potentielle Gefährdung des Patienten darstellen, wie es beispielsweise bei strahlungsbasierten Methoden, wie dem Röntgen, der Fall sein kann. Zum anderen liegen die Daten nach dem Erfassen in elektronischer Form vor und lassen sich einfach speichern, beispielsweise für spätere Vergleiche, oder auch übermitteln, beispielsweise von einem Zahnarzt zu einem zahntechnischen Labor.

Ein Problem, das sich bei optischen Verfahren zum Erfassen der dreidimensionalen Geometrie von Objekten, insbesondere Zähnen, immer wieder stellt, ist, dass im Mundraum vorhandene Weichteile, wie die Innenseite der Wangen oder die Zunge, unbeabsichtigt erfasst werden. Eine spätere Korrektur solch fehlerhafter Aufnahmen gestaltet sich üblicherweise schwierig, da auch bei Systemen, die mehrere Aufnahmen des selben Bereiches vorsehen, die fehlerhaften Aufnahmen in die erfasste bzw. berechnete Geometrie mit einfließen und diese verfälschen. Weiters stellen versehentlich aufgenommene Oberflächen ein unnötiges, zusätzliches Datenvolumen dar, das unter Umständen verschiedene Prozesse, wie beispielsweise die Visualisierung der erfassten Oberflächengeometrie, verlangsamen kann.

Die bisher im Stand der Technik unternommenen Lösungsansätze zu diesem Problem folgen vor allem zwei grundlegenden Strategien. Bei der einen Strategie werden die fehlerhaft erfassten Oberflächen als solche identifiziert und entfernt. Ein Beispiel für diese erste Herangehensweise zeigt WO 2013/010910 A1. Bei der zweiten Strategie werden Leerräume definiert bzw. identifiziert, in denen sich keine Oberflächen befinden können, und Oberflächen, bei denen in der Folge ermittelt wird, dass sie sich in diesen Leerräumen befinden, werden entweder durch das System entfernt, wenn das Identifizieren nach dem Messen erfolgt, oder von vornherein ignoriert. Ein Beispiel für diese Herangehensweise wird in EP 2 775 256 A1 offenbart.

Beiden Systemen gemeinsam ist, dass während oder nach dem Scannen aktiv entweder fälschlicherweise erfasste Oberflächen oder Leerräume als Fehler erfasst bzw. erkannt werden müssen, was zum einen Rechenressourcen benötigt und zum anderen anfällig für Fehler ist.

Die Publikation von Liao et al., "Automatic Tooth Segmentation of Dental Mesh Based on Harmonie Fields", BioMed Research International, Vol. 2015, August 2015, beschreibt ein Verfahren zur Separierung der Zahn- und Zahnfleischregionen.

Der Erfindung liegt daher die Aufgabe zu Grunde, die oben beschriebenen Nachteile zu überwinden und ein vereinfachtes Verfahren zur Bereinigung unerwünschter Oberflächenbereiche zur Verfügung zu stellen. Bevorzugt soll dieses auch unabhängig von einer jeweils zum Zeitpunkt des Bereinigens erfassten Oberfläche erfolgen können. Das heißt, auch ohne dass der Fehler zu einer wenigstens teilweise "fertigen" Oberfläche in Bezug gebracht werden kann.

Gelöst wird diese Aufgabe erfindungsgemäß durch ein Verfahren der eingangs genannten Art, wobei die Repräsentation wenigstens zwei aufeinander folgende Zähne darstellt und das Verfahren die folgenden Schritte beinhaltet:
a. Definieren einer Erstreckungslinie der Repräsentation, die im Wesentlichen dem Kieferbogen der wenigstens zwei aufeinander folgenden Zähne folgt und in einer x-y-Ebene liegt,
b. Festsetzen von Optimierungsflächen, die in wenigstens einem Bereich einen gleichbleibenden Abstand zur Erstreckungslinie haben, wobei die Optimierungsflächen als der zur x-y-Ebene senkrechten z-Achse folgende Parallelflächen zur Erstreckungslinie erzeugt werden,
c. Festlegen einer Innenseite und einer Außenseite der Optimierungsflächen,
d. Bestimmen aller Elemente der Repräsentation außerhalb der Außenseiten der Optimierungsflächen,
e. Entfernen aller Elemente außerhalb der Optimierungsflächen. Wenn es sich bei der Repräsentation wie erfindungsgemäß vorgesehen um einen Kieferbogen handelt, folgt die Erstreckungslinie, welche in Schritt a. definiert wird, dabei im Wesentlichen dem Kieferbogen. Mögliche Wege, um verschieden genaue Erstreckungslinien zu erzeugen, werden in späteren Abschnitten erläutert.

Nachdem durch die Schritte b. bis d. alle unerwünschten Elemente bestimmt wurden, können in Schritt e. dann alle entsprechenden, mit den bestimmten Elementen korrespondierenden Raumpunkte entfernt werden. In der Folge erhält man eine bereinigte Repräsentation, ohne dass dafür falsche oder korrekte Flächen in einem komplizierten Verfahren ermittelt werden mussten. Bevorzugte Ausführungsformen der Erfindung sind Gegenstand der Unteransprüche.

Nachstehend sind bevorzugte Ausführungsbeispiele der Erfindung anhand der Zeichnungen näher beschrieben. Es zeigt:
- Fig. 1: eine Methode zur rechnerischen Vereinfachung einer dreidimensionalen Repräsentation, insbesondere einer TSDF,
- Fig. 2: eine Methode zum Bestimmen von Hauptachsen,
- Fig. 3: beispielhaft ein erfindungsgemäßes Verfahren,
- Fig. 4: stark schematisiert eine nicht unter den Schutzbereich fallende Variante für eine Optimierungsfläche,
- Fig. 5: stark schematisiert eine erfindungsgemäße Variante für eine Optimierungsfläche,
- Fig. 6: beispielhaft die Visualisierung eines optisch erfassten Kieferabschnitts,
- Fig. 7: die beispielhafte Visualisierung von Fig. 6 mit einer Erstreckungslinie,
- Fig. 8: eine den Fig. 6 und 7 entsprechende, beispielhafte Visualisierung einer bereinigten Repräsentation,
- Fig. 9: ein alternatives Verfahren, um zu einer Erstreckungslinie zu gelangen,
- Fig. 10: eine alternative Methode zum Bestimmen von Hauptachsen,
- Fig. 11: ein weiteres, alternatives Verfahren zum Erzeugen einer Erstreckungslinie,
- Fig. 12: eine stark vereinfachte Darstellung der Schritte 111 bis 114 von Fig. 11,
- Fig. 13: eine stark vereinfachte Darstellung des Schrittes 115 in Fig. 11,
- Fig. 14: eine stark vereinfachte Darstellung der Schritte 116 bis 118 in Fig. 11 und
- Fig. 15: eine stark vereinfachte Darstellung des Schrittes 119 in Fig. 11 mit einer zusätzlichen, optionalen Erweiterung des Verfahrens von Fig. 11.

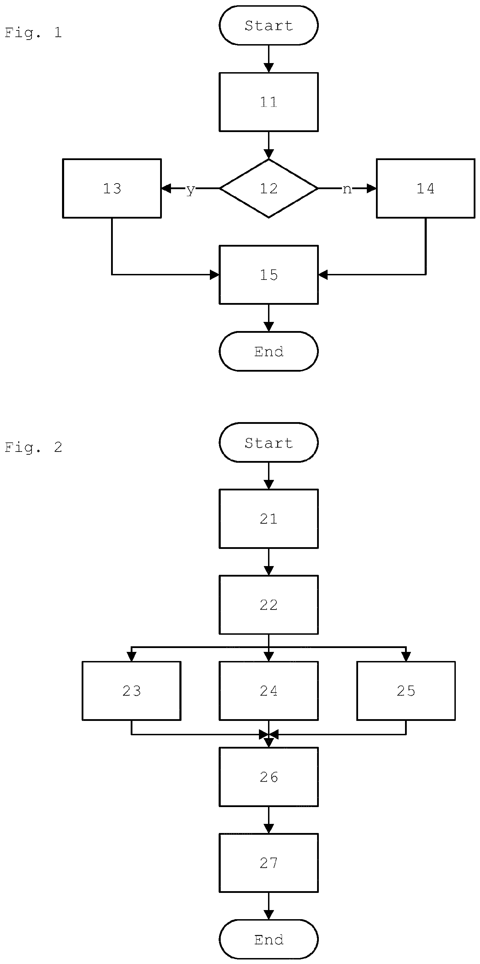

Fig. 1 zeigt eine Methode zur rechnerischen Vereinfachung einer dreidimensionalen Repräsentation, insbesondere einer TSDF. Dabei wird ein zu bereinigendes Modell zunächst in gröbere Abschnitte unterteilt. Hierfür werden jeweils Gruppen von Voxeln zu sogenannten Bricks zusammengefasst. Ein Brick ist dabei bevorzugt ein Würfel aus n³ Voxeln, bevorzugt 8³ Voxeln. Das Unterteilen der Repräsentation erfolgt in Schritt 11.

Dann erfolgt für jedes Brick die Abfrage, ob die Voxel des Bricks Oberflächeninformationen enthalten (Schritt 12).

Wird festgestellt, dass wenigstens ein Voxel des Bricks eine Oberflächeninformation enthält, wird für einen Mittelpunkt des Bricks ein Ortsvektor notiert. Dabei entspricht der Ortsvektor einer Verbindung von einem Ursprung eines Koordinatensystems, in dem die TSDF notiert ist, zum Mittelpunkt des Bricks (Schritt 13) .

Enthält ein Brick keine Voxel, die Oberflächeninformationen enthalten, wird es beispielsweise als "leer" markiert (Schritt 14).

Dann werden alle leeren Bricks und Ortsvektoren zu einer gemeinsamen Punktwolke zusammengefasst. Dabei bleibt aber für jeden Ortsvektor hinterlegt, mit welchen Voxeln er korrespondiert (Schritt 15).

Fig. 2 zeigt eine erste mögliche Methode zum Bestimmen von Hauptachsen. Hierzu wird zunächst in einem Schritt 21 die Kovarianzmatrix einer Punktwolke bestimmt. Dabei kann es sich beispielsweise um die vereinfachte Punktwolke aus den oben beschriebenen Schritten 11 bis 15 handeln. Es ist aber auch möglich, direkt mit einer Repräsentation, die in Form einer Punktwolke vorliegt, zu arbeiten. Im darauf folgenden Schritt 22 werden die drei Eigenvektoren der Kovarianzmatrix aus Schritt 21 bestimmt. Bei dreidimensionalen Punktwolken wird die Kovarianzmatrix immer drei Eigenvektoren liefern. Sind die

Eigenvektoren bestimmt, werden diese als die Achsrichtungen eines Koordinatensystems definiert. Bei einer 3x3-Kovarianzmatrix, wie sie sich aus einer dreidimensionalen Punktwolke ergibt, werden die Achsrichtungen dabei immer, wie bei einem kartesischen Koordinatensystem, orthogonal zueinander stehen. Für die z-Achse wird dabei die Richtung des kleinsten Eigenvektors gewählt (Schritt 23). Für die y-Achse wird beispielsweise die Richtung des größten Eigenvektors gewählt (Schritt 24). Für die x-Achse wird beispielsweise der mittlere Eigenvektor gewählt (Schritt 25). Wie für den Fachmann offensichtlich, können die Schritte 23 bis 25 in beliebiger Reihenfolge oder auch, wie in Fig. 2 dargestellt, parallel ausgeführt werden. Weiters wird in einem Schritt 26 der Schwerpunkt der Punktwolke bestimmt. Dieser wird dann in einem Schritt 27 als Ursprung des Koordinatensystems festgelegt. Selbstverständlich kann das Bestimmen des Schwerpunktes unabhängig von den übrigen Schritten des in Fig. 2 gezeigten Verfahrens erfolgen (abgesehen von Schritt 27). Bei hinreichender Rechnerleistung kann dieser Schritt beispielsweise auch parallel zu den übrigen Schritten erfolgen. Das so erzeugte Koordinatensystem mit seinen Hauptachsen im Bezug zur Punktwolke kann in späteren Schritten des Verfahrens vorteilhaft genutzt werden.

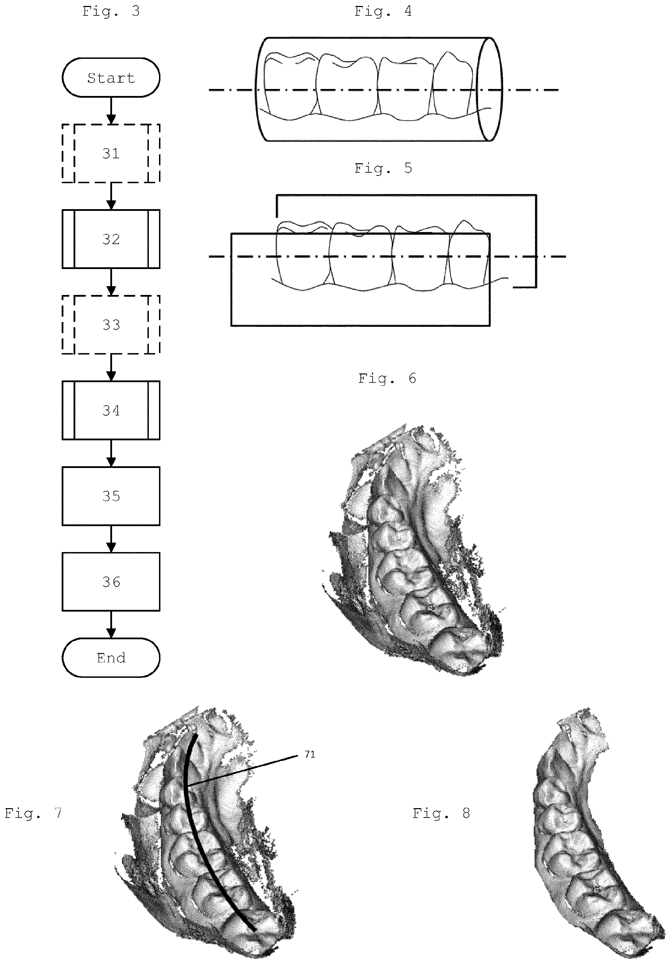

Fig. 3 zeigt beispielhaft ein erfindungsgemäßes Verfahren. Hierfür kann in Schritt 31 zunächst eine virtuelle Repräsentation, wie zu Fig. 1 beschrieben, vereinfacht werden. Dies ist für die Erfindung aber nicht zwingend erforderlich. Zum Beispiel kann dieser Schritt bei bestimmten Formaten, in denen die Repräsentation vorliegen kann, auch entfallen. Schritte, die selbstverständlich sind, wie beispielsweise das zur Verfügung stellen bzw. Laden der Repräsentation oder wie das anschließende Abspeichern, sind im Sinne der Übersichtlichkeit des dargestellten Verfahrens nicht einzeln angeführt oder dargestellt. Entsprechende Schritte vor und nach dem eigentlichen erfindungsgemäßen Verfahren können vom Fachmann entsprechend gewählt werden. Dies gilt selbstverständlich auch für die Reihenfolge der gewählten Schritte.

Im nächsten Schritt 32 wird eine Erstreckungslinie für die Repräsentation gewählt. Eine stark vereinfachte Erstreckungslinie ist eine Gerade entlang der Repräsentation. Ein Beispiel für eine solche Gerade kann die y-Achse der in Fig. 2 bestimmten Hauptachsen sein, bzw. die längste der festgesetzten Achsen. Es können aber auch gekrümmte Erstreckungslinien bestimmt werden.

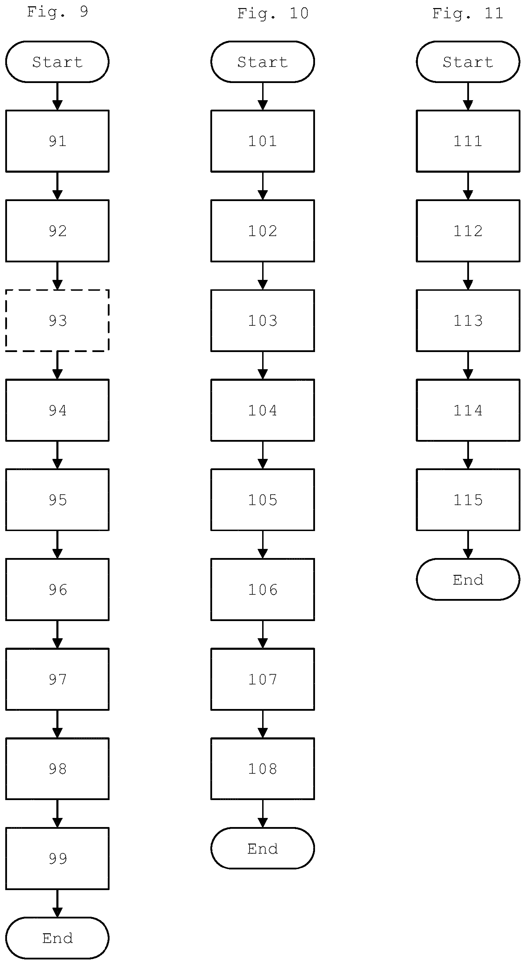

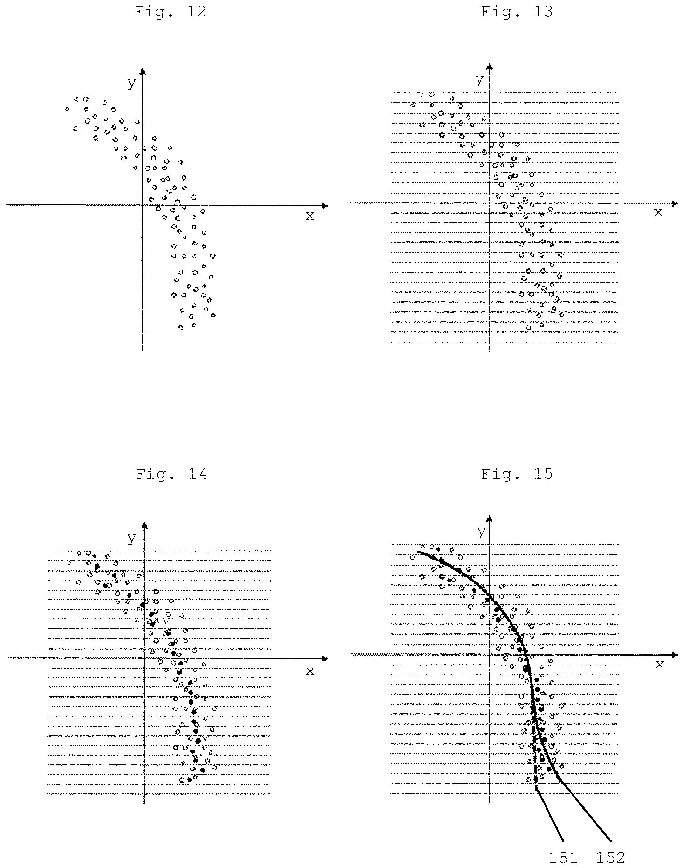

Beispiele zum möglichen Bestimmen gekrümmter Erstreckungslinien finden sich in den Fig. 9 und 11, sowie in den erläuternden Fig. 12 bis 15 zu Fig. 9. Eine alternative Methode zum Bestimmen von Hauptachsen, deren y-Achse als Erstreckungslinie verwendet werden kann, ist in Fig. 10 gezeigt.

In einem nächsten, optionalen Schritt 33 kann die Erstreckungslinie gegebenenfalls geglättet werden. Handelt es sich bei der Erstreckungslinie um eine Gerade, ist dieser Schritt selbstverständlich nicht erforderlich.

In einem folgenden Schritt 34 wird wenigstens eine Optimierungsfläche entlang der Erstreckungslinie erzeugt. Erfindungsgemäß besteht die Optimierungsfläche aus Parallelflächen zur Erstreckungslinie.

Bei einer alternativen, nicht unter den Schutzbereich fallenden Variante, bei welcher die Optimierungsfläche in Form eines Zylinders ausgebildet ist, ist bevorzugt, wenn es sich um einen Zylinder mit elliptischer Grundfläche handelt. Bei gekrümmten Erstreckungslinien werden auch entsprechende "schlauchartige" Oberflächen als Zylinder im Sinne der Erfindung betrachtet.

Bei der erfindungsgemäßen Variante, bei welcher die Optimierungsflächen Parallelflächen sind, werden Parallellinien zur Erstreckungslinie gebildet und in Richtung der z-Achse zu Parallelflächen erweitert.

Stark vereinfachte, schematisierte Darstellungen der beiden Varianten zeigen die Fig. 4 (zylindrisch) und 5 (Parallelflächen).

In Schritt 35 werden alle Punkte bzw. Voxel des ggf. vereinfachten Modells, welche außerhalb der Optimierungsfläche(n) liegen, markiert. Dabei werden/wird die der Erstreckungslinie zugewandte(n) Seite(n) der Optimierungsfläche(n) als "innen" und die jeweils andere(n), abgewandte(n) Seite(n) als "außen" betrachtet.

Die Abstände bzw. der Abstand zur Erstreckungslinie werden/wird so gewählt, dass zwischen den Innenseiten bzw. zur Erstreckungslinie ausreichend Platz ist, um das Modell nicht zu verfälschen. Der Abstand kann insbesondere der halben bis ganzen Dicke eines Molars, insbesondere 2/3 der Dicke eines Molars, entsprechen. Hierfür kann beispielsweise eine gemessene Dicke verwendet werden. Sollten für derartige Aussagen über das zu vermessende Objekt noch zu wenige Daten vorliegen, kann aber beispielsweise auch auf statistische Daten zurückgegriffen werden, um einen entsprechenden Abstand zu wählen. Üblicherweise wird aber ein Abstand von 5 mm bis 7 mm zielführend sein.

In Schritt 36 werden dann die Raumpunkte bzw. Informationen in den Voxeln der TSDF gelöscht bzw. auf "unbekannt" gesetzt, welche mit den im vorherigen Schritt markierten Punkten korrespondieren, damit aus der Repräsentation entfernt. Damit ist das Bereinigen abgeschlossen. Der Vorgang, ein Voxel als "unbekannt" bzw. "ungesehen" zu markieren, ist beispielsweise in der US 2015/0024337 A1 näher beschrieben.

Die Fig. 6, 7 und 8 zeigen jeweils beispielhaft eine Visualisierung der Repräsentation vor dem Bereinigen (Fig. 6), mit einer symbolisch eingezeichneten, gekrümmten Erstreckungslinie 71 (Fig. 7) und nach dem Bereinigen (Fig. 8).

Fig. 9 zeigt eine erste Methode, mit der eine gekrümmte Erstreckungslinie bestimmt werden kann. Dabei wird zunächst in Schritt 91 ein Koordinatensystem geladen. Methoden, um dieses zu erzeugen, zeigen beispielsweise die Fig. 2 und 12. Im darauf folgenden Schritt 92 wird eine Erstreckungsprojektionsebene erzeugt, die von der x- und der y-Achse des Koordinatensystems aufgespannt wird. Optional kann nun in Schritt 93 ein Erstreckungsprojektionsbereich definiert werden. Die einfachste Möglichkeit ist dabei, einfach das komplette Modell zu projizieren. In diesem Fall wird das gesamte Modell als Projektionsbereich bestimmt. Eine zweite Möglichkeit ist, nur die Hälfte des Modells abzubilden, vorzugsweise jene Hälfte, in welcher sich die Zahnkronen befinden. Der Vorteil hierbei ist, dass der Verlauf des Kieferbogens so deutlicher hervor tritt. In diesem Fall ließe sich beispielsweise die Hälfte ober- bzw. unterhalb der Erstreckungsprojektionsebene als Projektionsbereich definieren. Eine weitere Möglichkeit ist ein scheibenförmiger Projektionsbereich, wobei die Begrenzungen der Scheibe Ebenen sind, die parallel zur Erstreckungsprojektionsebene liegen und vorzugsweise nur einen geringen Abstand zueinander haben. Auch hierbei liegt der Vorteil darin, dass der Verlauf des Zahnbogens besonders gut zu erkennen ist.

Nachdem der Projektionsbereich definiert wurde, werden in Schritt 94 alle Punkte des Projektionsbereiches senkrecht (also der z-Achse des Koordinatensystems folgend) auf die Erstreckungsprojektionsebene projiziert. Dadurch entsteht eine 2D-Punktwolke, die symbolisch und stark schematisiert in Fig. 12 dargestellt ist. Diese Punktwolke wird dann in Schritt 95 in gleich große Streifen unterteilt, die jeweils parallel zur x-Achse verlaufen (Fig. 13).

Innerhalb jedes Streifens werden dann in Schritt 96 der größte und der kleinste x-Wert bestimmt und in Schritt 97 das arithmetische Mittel gebildet. Aus dem arithmetischen Mittel aus Schritt 97 und der Mitte des Streifens auf der y-Achse wird dann in Schritt 98 ein jeweils einem Streifen zugeordneter, in Fig. 14 schwarz eingezeichneter, Punkt für jeden Streifen bestimmt.

Sollte, beispielsweise aufgrund von Lücken in der Messung und/oder der Projektion, ein Streifen keine Punkte enthalten, wird dieser Streifen in den folgenden Schritten ignoriert.

Aus den Punkten von Schritt 98 kann dann in Schritt 99 eine Kurve bestimmt werden. Eine besonders geeignete und bevorzugte Methode hierfür ist die Methode der Kleinsten Quadrate. Es können aber auch andere Approximationsverfahren angewandt werden. Eine mögliche, approximierte Kurve 152, die nach dem in Fig. 9 gezeigten Verfahren entstanden ist, zeigt Fig. 15.

Weiters illustriert Fig. 15 eine optionale Erweiterung des Verfahrens von Fig. 9.

Es hat sich gezeigt, dass eine Approximation auf ein Polynom dritten Grades den vorderen Bereich (Schneidezähne) des Verlaufs eines Zahnbogens besonders gut trifft. Allerdings weicht diese Kurve im hinteren Bereich (also in Richtung der Molaren) stärker vom Verlauf des Kieferbogens ab, als eine einfache, gerade Erstreckungslinie. Um die Vorteile der guten Annäherung des Polynoms im vorderen Bereich zu erhalten und dabei dennoch die starke Abweichung im hinteren Bereich zu vermeiden, wird in einer Erweiterung des Verfahrens von Fig. 9 eine kombinierte Erstreckungslinie gebildet. Dazu wird zunächst ein Polynom dritten Grades auf die in Verbindung mit Fig. 9 beschriebene Weise erzeugt. Dann werden der Wendepunkt und die Wendetangente des Polynoms ermittelt. Als Erstreckungslinie wird dann im vorderen Bereich das Polynom definiert und ab dem Wendepunkt die Wendetangente. Ein derartiger alternativer Verlauf der Erstreckungslinie wird durch die gestrichelte Linie 151 in Fig. 15 illustriert. Selbstverständlich ist diese Erweiterung auch auf andere Verfahren zum Ermitteln einer gekrümmten Erstreckungslinie anwendbar, bei denen ein Polynom dritten Grades ermittelt wird, um den Verlauf des Zahnbogens zu approximieren.

Fig. 10 zeigt den Ablauf einer alternativen Methode zum Erzeugen von Hauptachsen, die in Schritt 32 erfolgen kann. Dabei werden zunächst in einem Schritt 101 die Normalvektoren der Oberfläche der Repräsentation bestimmt. Hierfür kann, wenn die Repräsentation in dieser Notation vorliegt, die TSDF herangezogen werden. Wurde die Notation, wie in Fig. 1 gezeigt, vereinfacht, wird der Normalvektor für jedes eine Oberfläche enthaltende Voxel des Bricks bestimmt und dann ein mittlerer Normalvektor erzeugt, indem alle Normalvektoren vektoriell addiert und der resultierende Vektor dann wieder auf Länge 1 gebracht wird. Der resultierende Vektor wird dann als Normalvektor des Bricks definiert.

Im darauf folgenden Schritt 102 werden die Normalvektoren aus Schritt 101 auf eine Einheitskugel projiziert (Gauß-Projektion). Als Mittelpunkt der Einheitskugel kann einfach der Ursprung des Koordinatensystems verwendet werden, in dem die Repräsentation bzw. ihre Vereinfachung notiert ist. Alternativ kann der Schwerpunkt der Repräsentation verwendet werden. Beide Varianten gleichzeitig sind beispielsweise dann abgedeckt, wenn das Koordinatensystem, in welchem die Repräsentation bzw. ihre Vereinfachung notiert ist, nach dem in Fig. 2 gezeigten Verfahren erzeugt wurde.

Die in Schritt 102 entstandene Gauß-Abbildung kann dann im folgenden Schritt 103 auf freie Flächen untersucht werden. Dabei wird davon ausgegangen, dass, selbst wenn das Modell Lücken aufweist, in denen keine Daten erfasst werden konnten, in jedem Fall keine Daten im Bereich des Kieferknochens selbst erfasst werden können. Einen größeren Bereich zu identifizieren, in dem keine Abbildung auf der Kugel vorliegt, bedeutet daher, gleichzeitig den Kiefer bzw. den "Ursprung" des repräsentierten Zahnes zu identifizieren. Wird dann in Schritt 104 eine Mitte dieses Bereiches bestimmt und dann in Schritt 105 eine Verbindung vom Mittelpunkt der Kugel zum Mittelpunkt des Bereiches gezogen, kann man davon ausgehen, dass diese Verbindung im Wesentlichen der Ausrichtung der repräsentierten Zähne entspricht. Folglich wird die in Schritt 105 erzeugte Verbindung als Richtung der z-Achse festgesetzt. Dadurch wird eine optimale Ausrichtung der Repräsentation zum Koordinatensystem bewirkt.

Eine Methode zum Bestimmen der (ungefähren) Mitte des leeren Bereiches in Schritt 104 könnte beispielsweise beinhalten, dass zunächst der Schwerpunkt aller abgebildeten Punkte auf der Gaußkugel bestimmt wird. Dieser Schwerpunkt der abgebildeten Punkte auf der Gaußkugel wird dann etwas vom Mittelpunkt versetzt liegen und dem leeren Bereich genau gegenüber liegen. Zieht man dann eine Verbindung vom Schwerpunkt der abgebildeten Punkte auf der Gaußkugel zum Mittelpunkt hin, weist dieser automatisch in Richtung der Mitte des leeren Bereiches. Er muss dann nur noch (unter Beibehaltung der Richtung) auf die Länge 1 gesetzt werden, und man erhält den oben beschriebenen Vektor, welcher dann in Schritt 105 als z-Achse festgesetzt wird.

Für die Bestimmung der weiteren Achsen des Koordinatensystems wird in einem Schritt 106 zunächst der größte Eigenvektor der Repräsentation bestimmt. Dieser wird in der Regel nicht orthogonal zur zuvor definierten z-Achse stehen und ist daher ungeeignet, selbst als Achse verwendet zu werden. Daher wird in Schritt 107 zunächst ein erstes Kreuzprodukt aus dem größten Eigenvektor und der z-Achse bestimmt. Die Richtung des resultierenden Vektors wird dann als die Richtung der x-Achse definiert. Zum Bilden der Richtung der y-Achse wird dann einfach in Schritt 108 das Kreuzprodukt aus der definierten z-Achse aus Schritt 105 und der definierten x-Achse aus Schritt 107 gebildet.

Alternativ kann in Schritt 108 auch das Kreuzprodukt aus der in Schritt 107 gebildeten x-Achse und dem in Schritt 106 ermittelten, größten Eigenvektor gebildet werden, um eine neue z-Achse zu ermitteln. Der größte Eigenvektor bleibt dann als y-Achse erhalten.

Die in Fig. 11 gezeigte Methode stellt eine weitere, alternative und vorteilhafte Methode dar, um in Schritt 32 (Fig. 3) zu einer Erstreckungslinie zu gelangen. Dazu wird in einem Schritt 111 zunächst eine (gegebenenfalls vereinfachte) Repräsentation, die bereits über ein zentriertes und ausgerichtetes Koordinatensystem verfügt, geladen. Mögliche Wege zum Erzeugen eines solchen Koordinatensystems zeigen die Verfahren in den Fig. 2 und 10. Auch bei diesem Verfahren wird dann in einem Schritt 112 eine Erstreckungsprojektionsebene zwischen der x- und der y-Achse aufgespannt. Im folgenden Schritt 113 wird die gesamte Repräsentation orthogonal auf die Erstreckungsprojektionsebene abgebildet. Auf die so entstandene, zweidimensionale Punktewolke wird dann in Schritt 114 die Methode der kleinsten Quadrate angewendet und die daraus resultierende Kurve wird notiert. Die in Schritt 114 festgesetzte Kurve wird dann in einem letzten Schritt 115 als Erstreckungslinie definiert.

Auch für das Verfahren von Fig. 11 kann die Erweiterung, bei welcher ab dem Wendepunkt die Wendetangente als Erstreckungslinie festgesetzt wird, welche zu den Fig. 9 und 15 erläutert wurde, für Kurven, die als Polynom dritten Grades angenähert wurden, angewandt werden.

Grundsätzlich kann die beschriebene Technologie sowohl nach als auch während des Scannens angewandt werden. Sollte Letzteres gewünscht sein, kann beispielsweise ein Abbild (Clone) der Repräsentation erzeugt, parallel zum Erfassen bearbeitet und zu einem späteren Zeitpunkt mit der gerade im Erfassen befindlichen Repräsentation zusammengeführt werden. Ein hierfür geeignetes Verfahren zeigt beispielweise das österreichische Gebrauchsmuster mit der Anmeldenummer GM 50210/2016.

### Beschriftung der Figuren:

Fig. 1
   - 11: Zerlegen des Modells in Bricks
   - 12: Voxel in Brick enthalten Oberflächeninformation?
   - 13: Bestimmen eines gemeinsamen Ortsvektors für alle Voxel des Bricks
   - 14: Brick als "Leer" markieren
   - 15: Zusammenführen aller Ortsvektoren und leeren Bricks zu einer vereinfachten Punktwolke
Fig. 2
   - 21: Bestimmen der Kovarianzmatrix der Punktwolke aus den Schritten 11 bis 15 (Fig. 1) bzw. Schritt 31 (Fig. 3)
   - 22: Bestimmen der drei Eigenvektoren der Kovarianzmatrix von Schritt 21
   - 23: Festsetzen des kleinsten Eigenvektors als Richtung der z-Achse
   - 24: Festsetzen des größten Eigenvektors als Richtung der y-Achse
   - 25: Festsetzen des mittleren Eigenvektors als Richtung der x-Achse
   - 26: Bestimmen des Schwerpunktes der Punktewolke
   - 27: Festsetzen des Schwerpunktes als Ursprung eines Koordinatensystems mit den Achsen aus den Schritten 23, 24 und 25
Fig. 3
   - 31: (optional) Vereinfachen des Modells (siehe Schritte 11 bis 15 von Fig. 1)
   - 32: Bestimmen einer Erstreckungslinie (beispielsweise die y-Achse der Hauptachsen siehe Schritte 21 bis 27 von Fig. 2 oder Schritte 121 bis 128 von Fig. 12, oder eine gekrümmte Erstreckungslinie siehe Schritte 111 bis 119 von Fig. 11 oder Schritte 131 bis 135 von Fig. 13)
   - 33: (optional) Optimieren der Erstreckungslinie
   - 34: Erzeugen der Optimierungsfläche(n)
   - 35: Markieren der Raumpunkte bzw. Voxel des Modells außerhalb der Optimierungsfläche(n)
   - 36: Entfernen der (in Schritt 35) markierten Raumpunkte bzw. Voxel
Fig. 7
   - 71: eine symbolische, gekrümmte Erstreckungslinie
Fig. 11
   - 91: Laden der Repräsentation mit Koordinatensystem (siehe Fig. 2 oder Fig. 12)
   - 92: Aufspannen einer Erstreckungsprojektionsebene, die von der x- und y- Achse des Koordinatensystems aufgespannt wird
   - 93: (optional) Definieren eines Erstreckungsprojektionsbereiches
   - 94: Projizieren der Punkte des Erstreckungsprojektionsbereiches auf die Erstreckungsprojektionsebene und Erzeugen einer 2D-Punktewolke
   - 95: Zerlegen der 2D-Punktewolke aus Schritt 114 in Streifen
   - 96: Bestimmen des jeweils größten und kleinsten x-Wertes je Streifen aus Schritt 115
   - 97: Bilden des arithmetischen Mittels der beiden Werte aus 116 für jeden Streifen aus Schritt 115
   - 98: Bilden eines Punktes je Streifen aus Schritt 115 mit dem arithmetischen Mittel aus Schritt 117 und der Mitte des Streifens auf der y-Achse
   - 99: Bilden einer Kurve aus den Punkten von Schritt 118, die als Erstreckungslinie definiert wird.
Fig. 10
   - 101: Zur Verfügung stellen einer vektoriellen Repräsentation, bspw. aus dem Verfahren von Fig. 1
   - 102: Projizieren der Vektoren der Repräsentation von Schritt 121 auf eine Einheitskugel (Gauß-Abbildung)
   - 103: Überprüfen der Kugel auf einen größeren freien Bereich (ohne projizierte Vektoren)
   - 104: Bestimmen eines Mittelpunktes des Bereiches aus Schritt 123
   - 105: Festsetzen der Richtung der z-Achse des Koordinatensystems als Richtung der Verbindung vom Mittelpunkt der Einheitskugel zum Mittelpunkt des Bereiches aus Schritt 124
   - 106: Bestimmen des größten Eigenvektors der Repräsentation
   - 107: Bilden eines ersten Kreuzproduktes der z-Achse aus Schritt 125 und des größten Eigenvektors aus Schritt 127 und Festsetzen des ersten Kreuzproduktes als x-Achse
   - 108: Bilden eines zweiten Kreuzproduktes aus z-Achse und x-Achse und Festsetzen des zweiten Kreuzproduktes als y-Achse
Fig. 11
   - 111: Laden der Repräsentation mit Koordinatensystem (siehe Fig. 2 oder Fig. 12)
   - 112: Aufspannen einer Erstreckungsprojektionsebene zwischen der x- und y- Achse des Koordinatensystems
   - 113: Orthogonales Abbilden aller Punkte der (ggf. vereinfachten) Repräsentation auf der Erstreckungsprojektionsebene
   - 114: Anwenden der Methode der kleinsten Quadrate auf die Abbildung aus Schritt 133 und Notieren der resultierenden Kurve
   - 115: Festsetzen der Kurve aus Schritt 134 als Erstreckungslinie
Fig. 15
   - 151: als Polynom dritten Grades angenäherte Erstreckungslinie
   - 152: alternativer Verlauf der Erstreckungslinie ab dem Wendepunkt entsprechend der Wendetangente des Polynoms 151

## Patentansprüche

1. Verfahren zum Entfernen unerwünschter Daten von einer optisch erfassten, virtuellen Repräsentation eines Kieferbogens umfassend Zähne und intraorale Strukturen, wobei
die Repräsentation wenigstens zwei aufeinander folgende Zähne darstellt und das Verfahren die folgenden Schritte beinhaltet:
a. Definieren einer Erstreckungslinie der Repräsentation, die im Wesentlichen dem Kieferbogen der wenigstens zwei aufeinander folgenden Zähne folgt und in einer x-y-Ebene liegt,
b. Festsetzen von Optimierungsflächen, die in wenigstens einem Bereich einen gleichbleibenden Abstand zur Erstreckungslinie haben, wobei die Optimierungsflächen als der zur x-y-Ebene senkrechten z-Achse folgende Parallelflächen zur Erstreckungslinie erzeugt werden,
c. Festlegen einer Innenseite und einer Außenseite der Optimierungsflächen,
d. Bestimmen aller Elemente der Repräsentation außerhalb der Außenseiten der Optimierungsflächen,
e. Entfernen aller Elemente außerhalb der Optimierungsflächen.

2. Verfahren nach Anspruch 1, **dadurch gekennzeichnet, dass** das Definieren der Erstreckungslinie in Schritt a. folgende Schritte beinhaltet:
i. Bestimmen der Eigenvektoren der Repräsentation,
ii. Definieren des längsten Eigenvektors als Richtung der Erstreckungslinie,
iii. Definieren der Länge der Repräsentation entlang des längsten Eigenvektors als Länge der Erstreckungslinie.

3. Verfahren nach Anspruch 1 oder 2, **dadurch gekennzeichnet, dass** es sich bei der virtuellen Repräsentation um eine TSDF handelt.

4. Verfahren nach einem der Ansprüche 1 bis 3, **dadurch gekennzeichnet, dass** die Repräsentation wenigstens drei, aufeinander folgende Zähne darstellt.

5. Verfahren nach einem der Ansprüche 1 bis 4, **dadurch gekennzeichnet, dass** die Erstreckungslinie eine Sequenz von miteinander verbundenen Geraden ist.

## Claims

1. Method for removing unwanted data from an optically detected, virtual representation of an arch of a jaw comprising teeth and intraoral structures, wherein
the representation depicts at least two successive teeth and the method comprises the following steps:
a. defining an extension line of the representation, which line essentially follows the arch of the jaw of at least two successive teeth and lies in an x-y plane;
b. stipulating optimization surfaces which have a constant distance from the extension line in at least one region, wherein the optimization surfaces are generated as parallel surfaces with respect to the extension line that follow the z-axis perpendicular to the x-y plane;
c. defining an inner side and an outer side of the optimization surfaces;
d. determining all elements of the representation outside the outer sides of the optimization surfaces;
e. removing all elements outside the optimization surfaces.

2. Method according to claim 1, **characterized in that** defining the extension line in step a. contains the following steps:
i. determining the eigenvectors of the representation;
ii. defining the longest eigenvector as the direction of the extension line;
iii. defining the length of the representation along the longest eigenvector as the length of the extension line.

3. Method according to either claim 1 or claim 2, **characterized in that** the virtual representation is a TSDF.

4. Method according to any of claims 1 to 3, **characterized in that** the representation depicts at least three successive teeth.

5. Method according to any of claims 1 to 4, **characterized in that** the extension line is a sequence of interconnected straight lines.

## Revendications

1. Procédé d'élimination de données indésirables d'une représentation virtuelle enregistrée optiquement d'une arcade mandibulaire comprenant des dents et des structures intra-orales,
la représentation représentant au moins deux dents successives, et le procédé comportant les étapes suivantes :
a. définition d'une ligne d'extension de la représentation, laquelle ligne d'extension suit sensiblement l'arcade mandibulaire des au moins deux dents successives et se trouve dans un plan xy,
b. établissement de surfaces d'optimisation à une distance constante de la ligne d'extension dans au moins une zone, les surfaces d'optimisation étant générées en tant que surfaces parallèles à la ligne d'extension suivant l'axe z perpendiculaire au plan xy,
c. définition d'un côté intérieur et d'un côté extérieur des surfaces d'optimisation,
d. détermination de tous les éléments de la représentation en dehors des côtés extérieurs des surfaces d'optimisation,
e. élimination de tous les éléments en dehors des surfaces d'optimisation.

2. Procédé selon la revendication 1, **caractérisé en ce que** la définition de la ligne d'extension à l'étape a. comporte les étapes figurantes ci-dessous :
i. détermination des vecteurs propres de la représentation,
ii. définition du vecteur propre le plus long en tant que direction de la ligne d'extension,
iii. définition de la longueur de la représentation le long du vecteur propre le plus long en tant que longueur de la ligne d'extension.

3. Procédé selon la revendication 1 ou 2, **caractérisé en ce que** la représentation virtuelle est une TSDF.

4. Procédé selon l'une des revendications 1 à 3, **caractérisé en ce que** la représentation représente au moins trois dents successives.

5. Procédé selon l'une des revendications 1 à 4, **caractérisé en ce que** la ligne d'extension est une séquence de droites reliées entre elles.
